(19) Europäisches Patentamt
European Patent Office
Office européen des brevets

(11) Publication number : **0 280 687 B1**

# (12) EUROPEAN PATENT SPECIFICATION

(45) Date of publication of patent specification : **13.05.92 Bulletin 92/20**

(51) Int. Cl.$^5$ : **C09C 3/10,** C08K 3/34

(21) Application number : **87901205.2**

(22) Date of filing : **21.01.87**

(86) International application number : **PCT/US87/00137**

(87) International publication number : **WO 88/00608 28.01.88 Gazette 88/03**

## (54) PROCESS FOR SURFACE TREATING LAYERED LATTICE SILICATES AND RESULTANT PRODUCTS.

(30) Priority : **22.07.86 US 887320**
**12.11.86 US 930278**
**17.12.86 US 943669**

(43) Date of publication of application : **07.09.88 Bulletin 88/36**

(45) Publication of the grant of the patent : **13.05.92 Bulletin 92/20**

(84) Designated Contracting States : **AT BE CH DE FR GB IT LI LU NL SE**

(56) References cited :
**US-A- 3 377 189**
**US-A- 3 386 851**
**US-A- 3 661 620**

(56) References cited :
**US-A- 3 773 708**
**US-A- 3 967 006**
**US-A- 4 433 097**
**US-A- 4 472 538**
**US-A- 4 525 388**

(73) Proprietor : **E.C.C. AMERICA INC.**
**5775 Peachtree-Dunwoody Road N.E. Suite 200 G**
**Atlanta Georgia 30342 (US)**

(72) Inventor : **RICE, Camilla, Arlyn**
**217 East Church Street**
**Sandersville, GA 31082 (US)**

(74) Representative : **Bull, Michael Alan et al**
**Haseltine Lake & Co. Hazlitt House 28 Southampton Buildings Chancery Lane**
**London WC2A 1AT (GB)**

**EP 0 280 687 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Field of the Invention

This invention relates generally to siliceous minerals such as aluminosilicates and the like, and more specifically relates to a method for producing a layered lattice silicate which is surface modified with an organic material. In one aspect of the invention, the products comprise particles of layered lattice silicate, the surfaces of which are modified by a polymer.

In another aspect the invention relates to a method which said mineral is pretreated to enhance subsequent functionalization, then is caused to react with a functional group-co taining moiety of an organic compound.

### Background of the Invention

The layered silicates to which the invention is applicable are of the type which can be represented by the general formula $E_iM_xSi_yO_n(OH)_m$ where M is Al, Mg, or Fe, x = 2 to 6; y = 2 to 8, n = 2 to 20, m = 0 to 8, and $E_i$ is one or more exchangeable ions (K, Na, Mg, Ca, Ba, Fe, Li, etc.). These layered silicates will hereinafter in this specification be referred to as "layered lattice silicates".

In this disclosure, the term "functionalization" means using a reactant that contains a functional group. The functional group subsists at least to some extent in the product obtained except when an olefin is used which leaves an alkane as product. The term "surface treated" means that only the surface is modified, that is, there is no intercalation in the layered lattice silicate or breakdown of its structure.

In the instance of layered lattice silicates such as kaolin clays, it has long been recognized that products having new properties and uses could be formulated by combining these aluminosilicates with organic materials. However, useful progress in this direction has tended to be limited by the lack of available covalent bonding at the mineral/organic interface. In the past this difficulty has been partially overcome by surface modification of the kaolinite through coupling of organosilane compounds, and subsequent reaction between dependent silanes and organics.

Thus, in Papalos U.S. Patent No. 3,227,675, for example, kaolin clays are described, the surfaces of which are modified with organofunctional silanes. A typical such agent, e.g., is a methacryloxypropyltrimethoxy silane. The kaolin clays so modified are advantageously used as fillers for natural and synthetic rubbers and the like. It is also pointed out in this pat ent that such modified products can serve as intermediates for synthesis of new pigments, which are useful as fillers for polymers, elastomers and resins. This result obtains because the silanes used to modify the kaolin clays are di- or polyfunctional, and only one functional group, the silane, is attached to the clay, leaving the remaining reactive groups to react further

Additional references of this type include Iannicelli U.S. Patent No. 3,290,165, and Iannicelli U.S. Patent No. 3,567,680.

However, the modification of aluminosilicates such as kaolin clays by the use of organosilanes, is a complicated and expensive process. Among other things, the cost of the organosilane itself is very high. Furthermore, the resulting products have only limited capability for further reaction, regardless of the particular organosilanes utilized. Also, when used in per. haps the most common application, i.e. as fillers in polymer systems, the limited number of available structures tends to impose limitations on the compatibility of such organosilane-modified pigments with various polymer matrices.

It has heretofore been known in addition, that in certain instances high temperature reactions of silicate films with hydrogen can be utilized for certain purposes, such as the production of hydroxide free silica for optical glasses. It is also known to those skilled in the art that products known as "hydrogen clays" can be produced by aqueous reaction of clays with mineral acids, as for example is described in U.S. Patent No. the 3,201,197. Such reactions have substantially no bearing upon the present invention, as will henceforth become evident.

In accordance with the foregoing, it may be regarded as as an object of the present invention, to provide a relatively simple and effective process for forming active intermediates from layered lattice silicates, such as aluminosilicates, which intermediates are eminently capable of subsequent functionalization with organic groups.

The kaolin group of clays represents a crystal structure wherein one gibbsite sheet is condensed with one silica sheet, forming a stable non-expanding type crystal lattice, whereas the remaining two groups, the montmorillonite group and illite group, conform to the expanding crystal lattice, consisting of a gibbsite sheet enclosed between two silica sheets. Clays composed of the non-expanding lattice structures are said to possess moderate surface activity and generally form relatively free flowing systems in water; whereas those composed of the expanding crystal lattice are capable of high colloidal activity and hydration, producing plastic and gel-like water systems

It is therefore a specific object of the invention to combine kaolin clays with organic materials thereby rendering them lipophilic. That is to say, it is desirable to render normally hydrophilic layered lattice silicates such as kaolin, oleophilic, whereby they may be used as fillers for organic materials such as polymers, elastomers, resins and the like.

It is a yet further object of the present invention, to provide a novel process for preparing analogs of known silane-modified layered lattice silicates, such as analogs of known silane-modified kaolin clays, which process produces such materials with much greater simplicity than prior known techniques for producing the said silane-modified clays.

U.S. Patent 3,397,171 describes a process for the production of polyamide textile fabrics in which a small percentage of a kaolinite is added to polycarbonamide-forming reagents plus a deflocculant and the mixture is then polymerized. It is mentioned, however, that microscopic inspection reveals that each kaolinite platelet is surrounded by an elongated void where the polymer has separated from the particle, so that evidently no bonding has occurred by use of this process.

In U.S. Patent 3,912,532 particles of a clay such as kaolin are coated with a urea-formaldehyde resin by dispersing the clay particles in an aqueous solution of a prepolymer of urea-formaldehyde and then polymerizing the latter. The product are used as opacifying agents for paper.

U.S. Patent 4,230,501 describes compositions of pigments such as carbon black mixed with a combination of waxy materials and wax-like materials. The products are said to be dispersible in plastics.

According to U.S. Patent 4,091,164, normally hydrophilic inorganic fillers such as kaolin clays are modified to enhance their dispersibility in polymeric resins by admixing filler particles with a block copolymer of ethylene oxide and propylene oxide under shear and at elevated temperature to coat the filler particles with the block copolymer.

In U.S. Patent 4,349,389 an inorganic pigment such as titanium dioxide, suitably as an aqueous slurry, is coated with a substance which renders the surface hydrophobic, such as dispersing agents of the type of alkylbenzene sulfonic acids, and then with a thermoplastic polymer which may be used as a mixture with an emulsifying agent. The products are said to be dispersible in thermoplastics and paints.

U.S. Patent 3,573,944 describes a process of forming organophilic particles from a clay such as kaolin, by heating to drive off bound water, cooling, adding a solution in a petroleum ether solvent of an alkylene divinyl ether and polymerizing said ether while refluxing the solvent.

U.S. Patent 3,901,845 describes filled and reinforced polyamide (e.g. nylon 6 or nylon 6.6) compositions in which a mineral filler such as silica is chemically coupled to the polymer matrix by an aromatic compound having a carboxyl group and a hydroxyl or amine group.

In accordance with the foregoing, it may be regarded as a further object of the present invention, to provide new types of surface modified layered lattice silicate pigments, which are totally and directly compatible with the polymer systems to which they may be added as fillers, and which when so used provide out standing improvements in the mechanical and other useful properties of the filled system.

It is also an object of the invention to provide a method of surface modification of layered lattice silicates in which improved bonding of modifier to the silicate surface is achieved.

It is yet a further object of the invention to provide a relatively simple, and effective process, for preparing the aforementioned surface modified pigments from layered lattice silicates, such as aluminosilicates, and which enables preparation of such products with a wide variety of compatibility characteristics for use in desired polymer matrices.

## Summary of Invention

Now in accordance with the present invention, the fore going objects, and others as will become apparent in the course of the ensuing specification, are achieved in a method of treating a layered lattice silicate so that the latter becomes surface modified with an organic material.

In one aspect a method is employed comprising pretreating layered lattice silicates in substantially dry particulate form, with a hydrogen-containing gas thereby activating the surface thereof. By "activating the surface" is meant that the surface becomes susceptible to the surface bonding or reaction or polymerization of organic moieties. The pretreatment conditions the silicate in some manner so as to make it more receptive to reaction with the functional group-containing organic compound. At all events it has now been found that the final product according to the invention shows chemical bonding at the silicate surface.

The said pretreatment is conducted at temperatures above about 250°C. Typical temperatures utilized are in the range of from about 300°C to about 400°C.

The composition may be treated with gaseous hydrogen. This mixture may include as well an inert gas carrier, such as nitrogen or argon.

The gaseous treating composition may further, and pre ferably does, comprise a mixture of hydrogen and nitrogen. The hydrogen may comprise from about 5% to 100% by volume of the total gas, with a preferred range being from 5% to 50% by volume

The contacting may be conducted in a fluidized bed reactor, with the gaseous components passing upwardly through a suitable diffuser plate, and into a fluidized bed of the particulate arterial being treated. The contacting may also be conducted in similar apparatus which provides good gas-solids contact -- such as a rotary furnace. Typical treatment times are from about 5 to 30 minutes, depending upon concentration of the ingredients and temperature, although longer times can be utilized.

Various layered lattice silicates, including minerals comprising the same, may be treated by the method of the invention. Thus, for example, clays of the halloysite, illite, kaolinite, montmorillonite, palygorskite groups, and various other clays, can be readily treated by the present invention.

The intermediates prepared by use of the present process are highly reactive, and may lose their activity if substantial moisture or atmospheric oxygen are present. For this reason, once the said intermediates are prepared, and until they are used, they must be maintained in a substantially dry state.

The functionalization of the hydrogen treated silicate materials can be achieved by various methods, such as by contacting them under suitable reaction conditions with compounds having active organic groups, for example, C=C. The reaction is suitably carried out with the functionalizing reactant in the fluid phase, i.e., in the liquid or preferably the gaseous phase. This can be effected by various techniques, for example, in many instances by simple mixing of the intermediate with the reactant.

In general, since the pretreatment/reaction only involve the surface, times for these interactions are relatively short.

In general, the useful organic compounds contain polymerizable organic moieties and include olefins, diolefins, acetylenes, allylic compounds and vinyl compounds. These unsaturated compounds may, for example, be hydrocarbon substituted or unsubstituted ethylene such as ethylene, propylene; hydrocarbon substituted or unsubstituted butadiene such as butadiene, isoprene; vinyl pyridines, vinyl acetate, styrene, acrylic acid, phenyl acetylene, allyl mercaptans and allyl amines. Temperature conditions are generally moderate, suitably above room temperature and up to about 300°C. Reaction times are short since one is only satisfying the surface demand, and a time in the range of about 15 seconds to about 5 minutes will generally be sufficient although it may be extended if desired up to about 1 hour.

In another aspect of the invention, the layered lattice silicate which is in substantially dry particulate form, is contacted with an organic monomer, co-monomers, or a prepolymer, viz., not fully polymerized to its highest molecular weight range, and surface polymerization or reaction is effected in the presence of a gaseous hydrogen atmosphere. The level of addition of the monomers/prepolymers may suitably be in the range of about 0.25 weight percent to about 10 weight percent based on the weight of the silicate. The starting material, i.e. the layered lattice silicate such as a refined kaolin, is initially thoroughly dried and blended with a solid or liquid monomer (or as mentioned, co-monomers or a prepolymer), as for example, by milling of the dry kaolin and a dry monomer in a suitable mill which may also be screened. The resulting powder is thereupon provided in a suitable reactor, which has previously been heated to an intermediate temperature, for example, 100°C. The reactor is flushed with nitrogen to remove residual oxygen and thereupon a flow of hydrogen is substituted for the nitrogen. The hydrogen need not be pure and may contain inert constituents. Heat is then provided to increase the temperature to at least the melting point of the monomer, but insufficient to volatilize the monomer while the hydrogen atmosphere is maintained. The temperatures are generally under about 350°C, typically being of the order of 150°C to 250°C for representative monomers, or somewhat lower.

The said reaction may be conducted in apparatus which provides good gas-solids contact, such as a rotary furnace. The said reaction may also be conducted in a fluidized bed reactor with the gaseous components passing upwardly through a suitable diffuser plate, and into a fluidized bed of the particulate material being treated. Typical reaction times are from about 5 to 45 minutes, depending upon concentration and composition of the reactants and temperature, although longer reaction times can be utilized.

If a fluidized bed is used, after the reaction is completed, for example, in 25 minutes, the heating source is remove from the reactor and the unit allowed to cool to about 100°C while the hydrogen atmosphere is maintained, and thereafter the hydrogen is replaced by a flow of nitrogen, upon which the reactor is allowed to cool down and the product removed.

The product is found to be a layered lattice silicate such as kaolin, which is surface bound to the polymerized organic. When the product is used in typical filler applications, it yields excellent improvements in the mechanical and other useful properties of the filled system.

Thus, it has now been found that with the use of hydrogen an effective, strong bonding of modifier to the silicate surface is achieved.

A large variety of organic monomers can be used in the process of the invention; for example E-caprolactam

or alternatively 6-amino caproic acid, to produce nylon 6; hexamethylenediammonium adipate or the co-monomers hexamethylene diamine and adipic acid, to form nylon 6,6; the corresponding monomer from hexamethylene diamine and sebacic acid or the co-monomers, to form nylon 6,10; and the lactam of heptanoic acid to form nylon 7. It will be apparent that other monomers, co-monomers or prepolymers may be used to produce various nylon types. In addition, other types of prepolymers (e.g. ABS prepolymer, polybutadiene, polypropylene, polyethylene) are capable of being reacted in situ on the mineral, to make the latter useful as fillers for polymer matrices, in particular matrices of the same polymer as that deposited on the layered lattice silicate particles. Similarly, the in situ formed polymer need not be identical to the matrix polymer, provided that the two are compatible. It is believed that the polyamide (nylon) type polymers grow from the surface of the mineral which results from the exposure of the mineral surface to nylon type monomers/prepolymers; and that in the case of the other resins (ABS prepolymer, polybutadiene, polypropylene, polyethylene) the polymer resin is exposed to the mineral surface and becomes bonded to it.

Thus, the invention includes the in situ synthesis of polymers on a layered lattice silicate surface with the primary i.e. first layers being surface bonded; and as a product, a particulate layered lattice silicate comprising particles of the silicate the surfaces of which are modified by the in situ synthesized polymer.

## Brief Description of the Drawings

In the drawings:

FIGURE 1 is a reference infrared spectra known in the literature (taken from the Aldrich Library of Infrared Spectra) of 6-aminocaproic acid;

FIGURE 2 is a reference infrared spectra from the cited Aldrich Library, for nylon 6 [poly(caprolactam)] pellets

FIGURE 3 is an infrared drift spectra for a sample of a calcined kaolin reacted in accordance with the inventin with 2.5% by weight of 6-aminocaproic acid;

FIGURE 4 is an infrared drift spectra for a sample of a calcined kaolin reacted in accordance with the invention with a 1% water and 5% caprolactam composition;

FIGURE 5 is a reference infrared spectra from the above cited Aldrich Library, for nylon 6,6 [poly(hexamethylene adipamide)] pellets;

FIGURE 6 is an infrared drift spectra for a sample of a calcined kaolin reacted in accordance with the invention, with 3% by weight adipic acid plus 2.6% 1,6 diaminohexane;

FIGURE 7 is a reference infrared spectra from the above cited Aldrich Library, for Acrylonitrile/butadiene/styrene (ABS resin beads; and

FIGURE 8 is an infrared drift spectra for a sample of an air classified kaolin reacted in accordance with the invention with 5% by weight of an ABS prepolymer.

## Detailed Description

The invention will now be illustrated by a series of Examples, which, however, are to be considered as merely exemplary of practice of the invention, and not as delimitive thereof.

## Example I

### Preparation of a Surface Modified Kaolin Clay

In this Example, the starting arterial was an airfloated kaolin clay, having approximately 60% by weight of the particles thereof less than 2 microns equivalent spherical diameter (E.S.D.). A 400 gram sample of this material was initially dried for 1-1/2 hours in an oven at temperatures of about 150°C. The sample showed a weight loss, indicating that moisture had been successfully driven off from same, to produce a substantially dry arterial.

The said sample was placed in a laboratory fluidized bed reactor, the system was equilibrated to 300°C, at which time a mixture of hydrogen and nitrogen in a volume ratio of 5 to 95 parts, at 300°C, was passed through the fluidized bed. The gas mixture was flowed at the rate of about 0.02 standard cubic metres per minute (about 0.7 standard cubic feet per minute (SCFM)), and served to sustain the fluidized bed. The hydrogen treated clay was cooled to 80°C in a stream of nitrogen gas. 1,3 butadiene (at room temperature) was passed through the intermediate activated clay for one minute. The resultant surface modified clay was found to be partially hydrophobic in a water system, in contrast to the properties of an untreated kaolin clay. An elemental analysis showed an increase of 0.32 carbon. The clay was found to decolorize both a solution of potassium permanganate, and a bromine in carbon tetrachloride solution, indicating the presence of unsaturation on the clay. The

carbon was not removed by either water or acetone washing. A differential scanning calorimetry measurement of the treated clay showed that the organic was thermally stable on the clay surface to at least 300°C.

Example II

In this Example, a further sample of an air-floated relatively fine fraction of kaolin clay having a P.S.D. (particle size distribution) such that 60% by weight of the particles thereof were less than 2 microns E.S.D., was subjected to hydrogen treatment in accordance with the present invention. The sample was treated a combination of nitrogen and hydrogen under conditions generally identical to those of Example I. The sample in particular, after being initially dried, was treated in the laboratory fluidized bed reactor for a time of 15 minutes at a temperature of 280°C.

A portion of the resultant intermediate from this Example was maintained under argon and approximately 3 grams were transferred to a thick walled glass ampul (still under argon), with approximately 2% by weight of allylchoride being added as a liquid at room temperature. The ampul was sealed and then placed in a 50°C oven for 30 minutes. The resultant functionalized product was found to contain 0.15% allylchloride (based on both carbon and chlorine analysis.) The resulting product did not decolorize potassium permanganate solution or a bromine in $CCl_4$ solution, indicating the disappearance of the unsaturated character of the allylchloride. Infrared spectra were obtained on the treated and untreated clay samples. There was a definite appearance of a CH stretch in the 3050 to 2750 $cm^{-1}$ range for the treated clay sample. This organic was not removed from the surface by acetone or water washing.

Example III

In this instance, a 400 gram sample of an air classified kaolin was initially dried as with the procedure of Example 1, and loaded into a laboratory fluidized bed reactor, and the temperature equilibrated at 250°C. A fluidized bed was established by flow of nitrogen from a source having a regulated pressure of approximately 0.17 MPa (10 pounds per square inch). 50% of hydrogen at 300°C was flowed into the reactor with the nitrogen inert gas, and the treatment was carried out initially for 15 minutes at 300°C. At the conclusion of the treatment, the intermediate product was cooled to 80°C and allylmercaptan was vaporized in $N_2$ and flowed through the hydrogen activated clay for approximately 4 minutes (approximately 20 ml in total of allylmercapian). There was a color change of the clay associated with the allylmercaptan treatment. Based on an elemental analysis of total carbon, there was a 0.14% carbon increase upon reaction, translating to approximately 0.29% allylmercaptan bonded to the surface.

Example IV

In this instance, a 400 gram sample of an air classified kaolin was initially dried as with the procedure of Example I, and loaded into a laboratory fluidized bed reactor, and the temperature equilibrated at 300°C. A fluidized bed was established by flow of nitrogen from a source having a regulated pressure of approximately 0.17 MPa (10 pounds per square inch). 50% of hydrogen at 300°C was flowed into the reactor with the nitrogen inert gas, and the reaction was carried out initially for 15 minutes at 300°C. At the conclusion of the treatment, the sample was cooled to 70°C and treated with propylene gas for 1 minute which was just passed through a heat exchanger at 300°C. The resultant clay showed a total carbon content increase of 0.14%.

Products of the present invention are found to be particularly useful as fillers in polymers, elastomers, plastics, paints or papers. Where such materials, for example, are used as fillers in epoxy compounds, it is found that the resultant cured epoxy systems display increased hardness and higher shear adhesion strength chan have been obtainable with prior art fillers based upon kaolin clays, or silane-modified kaolin clays.

The following Example V is representative of the improvements achieved in filled resin systems in accordance with the present invention.

Example V

In this Example, three different surface modified kaolins were prepared by procedures similar to Example 1, but with differing surface treatment levels as indicated below:

Table I

| Sample | Treatment | % Carbon* |
|---|---|---|
| A | $H_2$ + 1, 3 butadiene (30 sec.) | 0.14 |
| B | $H_2$ + 1, 3 butadiene (2 min.) | 0.98 |
| C | $H_2$ + 1, 3 butadiene (1 min.) | 0.32 |

*increase in total carbon content after reaction with 1, 3 butadiene

The above products were then used as fillers in an otherwise conventional EPDM (ethylene propylene diene monomer) insulation formulation. An untreated filler was also used as a control, specifically the untreated clay used in Example 1. The insulation formulation was as follows:

Table II

EPDM Insulation Formulation

| Additive | parts per 100 parts EPDM rubber |
|---|---|
| Vistanlon* 4608 (EPDM) | 100 |
| Zinc Oxide | 5 |
| Stearic Acid | 0.5 |
| Flectal H** | 1.5 |
| Percardox+ 14/40 (peroxide) | 7.0 |
| Rhenufit++ Tac/s (coagent) | 2.0 |
| Filler (A, B, C or control) | 150 |
| Sunpar+++ 2280 (oil) | 30 |

*Esso Chemical
**Monsanto (anti-oxidant)
+Akzo (curing agent)
++Bayer (initiating catalyst)
+++Sun Oil Co. (lubricant)

The above formulations were cured at 170°C for 20 minutes and the physical properties of the resultant samples were determined as follows:

Table III

Physical Properties of EPDM Filled With Various Kaolin Samples

| Filler | % Elongation at Break | Tensile* (MPa) | Modulus** 100% (MPa) | Tear*** Newtons per mm | Shore A Hardness |
|---|---|---|---|---|---|
| A | 440 | 6.6 | 3.5 | 54 | 68 |
| B | 800 | 8.0 | 2.4 | 68 | 67 |
| C | 800 | 6.5 | 2.4 | 51 | 67 |
| Untreated kaolin (control) | 340 | 4.2 | 2.5 | 55 | 67 |

* Tensile is the force per unit area required to stretch the test piece to its breaking point.

** Modulus at 100% is the stress required to stretch a test piece of rubber to 100% elongation and is repeated in units of mega Pascals.

***Tear strength is the force required to tear a unit thickness of a test piece.

As seen in Table III, the EPDM samples filled with products of the invention show very marked improvements in elongation and tensile, as compared with the samples filled with the prior art untreated kaolins.

Example VI

In this Example a further surface modified kaolin was prepared as in Example IV and was then used as a filler at the 30% weight level in a polypropylene system. Physical properties were evaluated for the resultant filled system and compared with such properties for an unfilled polypropylene and for a polypropylene filled (at 30%) with an untreated kaolin clay. Results are set forth in Table IV below:

Table IV

Physical Properties of Filled Polypropylene

| | Tensile Modulus (MPa) | Tensile Strength (MPa) | % Elongation at Break |
|---|---|---|---|
| Polypropylene (PROFAX) filled with untreated kaolin control | 1440 | 25.3 | 8 |
| Unfilled polypropylene control | 1220 | 31.8 | 15 |
| Polypropylene (PROFAX) filled with treated kaolin | 1775 | 33 | 6 |

It will be seen from Table IV that the polypropylene system filled with the treated clay displayed an increase in tensile modulus and tensile strength over either of the control formulations.

Example VII

An air-classified kaolin (80% less than 2 micrometers, E.S.D.; surface area = $19m^2/g$) was treated in a fluidized bed reactor at 180°C for 30 minutes in a 50%/50% by volume hydrogen/ nitrogen atmosphere. It was cooled to room temperature in a 100% $N_2$ atmosphere. A sample was transferred to a glass ampul and 2 weight % 2-vinylpyridine (a liquid) based on the weight of the clay was introduced into the ampul atmosphere. The ampul was flushed with nitrogen to remove any traces of oxygen and sealed. It was placed in an oven at 170°C and reacted for 30 minutes. At the end of the 30 minutes reaction time, the ampul was removed from the oven and cooled to room temperature. The ampul was opened, the clay removed and split into 2 samples. One sample was water washed. The other was acetone/ether washed. The resulting washed products contained 0.82% 2-vinylpyridine as determined by carbon and nitrogen analysis.

Example VIII

An air-classified kaolin clay as described in Example VII was treated in a fluidized bed reactor in 50%/50% by volume $N_2/H_2$ atmosphere for 5 minutes at 305°C. The clay was cooled in $N_2$ to 178°C and acetylene gas was then passed through the clay for 5 minutes. The clay was further cooled to room temperature in a $N_2$ atmosphere. The treated sample was analyzed by carbon content for surface species. The resulting clay has a carbon content 0.16% greater than before the reaction. None of the organic was removed by solvent washing.

Example IX

The same kaolin as in Example VII was treated in a fluidized bed at 300°C for 5 minutes in a 50%/50% by volume $N_2/H_2$ atmosphere. The kaolin was cooled to room temperature in $N_2$. 100g of the $H_2$ treated kaolin was transferred under $N_2$ to a Waring Blendor and treated with 0.25 weight % allylamine for 5 minutes. The resulting treated kaolin was analyzed for carbon and nitrogen before and after washing with acetone. The treated kaolin had a carbon content of 0.11% carbon and 0.026% nitrogen after reaction. The N and C content did not change upon solvent washing.

Example X

An air-classified kaolin (82% less than 2 micrometers E.S.D.; surface area = $20.2m^2/g$) was treated in

50%/50% by volume $N_2/H_2$ atmosphere at 300°C for five minutes. The resulting kaolin was cooled to room temperature in a nitrogen atmosphere. 100g was transferred under nitrogen to a nitrogen filled Waring Blendor and treated with 0.5% ethylmercaptan. The system was allowed to react at room temperature for five minutes. The resulting kaolin showed an increase in carbon and sulfur content of 0.29 and 0.29% respectively. The content of carbon and sulfur was unchanged by acetone or water washing.

Example XI

An air-classified kaolin (82% less than 2 micrometers E.S.D.; 20.2m²/g surface area) was treated in a fluidized bed reactor in a 50%/50% $N_2/H_2$ atmosphere at 312°C for fifty minutes. The kaolin was cooled in a stream of nitrogen to 40°C and then reacted for 10 minutes with allyl amine which was vaporized in a stream of argon. At the end of the reaction, the sample was analyzed for carbon and nitrogen by elemental analysis, indicating 0.42% allylamine had reacted with the surface. None of the organic was removed by solvent washing.

In connection with the following Examples, certain compounds with their formulas, which are interrelated, are shown below:

| | |
|---|---|
| adipic acid | O<br>$HO-C(CH_2)_4COOH$ |
| 6-amino caproic acid | O<br>$NH_2(CH_2)_5C-OH$ |
| E-caprolactam | H<br>N<br><br>= O |
| nylon 6 | $H\ [NH(CH_2)_5CO]_n\ OH$ |
| nylon 6,6 | $H\ [NH(CH_2)_6NHCO(CH_2)_4CO]_nOH$ |

Example XII

This Example illustrates the procedure involved in preparation of a typical surface-modified filler pigment pursuant to the invention.

. The starting arterial for this Example was a commercially available calcined kaolin, viz., the calcined kaolin product Alphatex® of Anglo-American Clays Corporation (Sandersville, Georgia), which product is further described in U.S. Patent No. 4,386,948. This material, in thoroughly dry form, was blended with a solid monomer. In this instance, the monomer was 6-amino caproic acid ("6 ACA"), which was milled with the dry kaolin in a Micropulverizer® mill and screened during milling. The screen had a mesh opening of 0.17mm (.0067 inches). The 6 ACA was mixed during milling at 2.5% by weight of the kaolin. After the arterial was thoroughly milled and screened, it appeared as uniform powder. A pound of the said powder was placed in a fluidized bed reactor that had previously been heated to a temperature of approximately 100°C. The reactor was flushed with nitrogen to remove residual oxygen. Thereupon, a flow of hydrogen was introduced by switching the flow of nitrogen to hydrogen. The temperature was then increased to approximately 250°C to 265°C. This temperature was maintained for approximately 25 minutes while the hydrogen atmosphere was maintained; and thereafter the hydrogen was replaced by a flow of nitrogen, after which the unit was allowed to cool down and the product removed for testing.

Drift infrared spectra was obtained on a Perkin-Elmer 1710 F.T. infrared spectrophotometer fitted with a diffuse reflectance attachment, and are set forth in figure 3. The base kaolin has been subtracted from this spectra to enable one to monitor the surface organic treatment without interference of the base kaolin. (Comparison should be made to the reference spectra of figures 1 and 2). IR bands in the spectra showed the following: A shift can be noted in the 1575 $cm^{-1}$ band which is shifted approximately 50 $cm^{-1}$ toward a higher wave number, and in addition there is a broadening observed in the 1640 $cm^{-1}$ band; and further seen is a disappearance of the 3300-3400 $cm^{-1}$ band due to the NH stretch. This all indicates that the molecule of the 6 ACA has bonded to the surface of the kaolin. Also to be noted is that small bands are appearing at 3300 and 3080 $cm^{-1}$, which are indicative of polrmerization and nylon formation.

Example XIII

The procedure utilized in this example was substantially identical to that used in Example XII, except that the starting material for the treatment by the process of the invention was a further comercially available calcined kaolin, the Whitetex® product of Freeport Kaolin, which is a so-called "PRP" (paper, rubber, plastic) grade of calcined kaolin, i.e. a somewhat coarser kaolin having an average particle size of approxmately 70% by weight less than 2 microns equivalent spherical diameter (E.S.D.). Further, in this Example, the treating composition was 1% water and 5% caprolactam. following the preparation of the monomer/kaolin mixture by the procedure as in Example XII, the treatment in the reactor was identical as described in Example XII, except that a temperature of 190°C was used; and after such treatment, infrared drift spectra were obtained for the sample and are set forth in Figure 4. The spectra in Figure 4 should be compared with those in figure 2, which is a reference infrared spectra for nylon 6. It will be evident by such comparison that the polymerized nylon 6 has been achieved at the surface of the kaolin.

Example XIV

The procedure utilized in this Example was substantially identical to that set forth in Example XIII, and the starting material was the Whitetex® calcined product aforementioned. However, the monomer in this instance comprised 3.0% adipic acid together with 2.6% by weight of 1,6 diaminohexane. Following the treatment as set forth in Examples XII and XIII, (but utilizing a reaction temperature of approximately 280°C), the drift spectra were obtained for the product and were compared to those of nylon 6,6 which appear in Figure 5. The drift spectra of the samples are seen in figure 6, and it will be evident again that polymerization upon the surface of the calcined kaolin has occurred to produce nylon 6,6.

Example XV

In this Example, a further kaolin was utilized, namely an uncalcined or, as it is sometimes referred to in the art, a "hydrous" kaolin, the material being an air-classified product having a particle size distribution such that 82% by weight of the particles were of less than 2 micrometers E.S.D.; and having a surface area of 20 $m^2/g$. The monomer in this instance comprised 5% by weight of an ABS prepolymer. This was the resin of high butadiene content product of Aldrich (#18,088-2). The procedure used during treatment was as described in connection with the just preceding Examples (except reaction temperature was 275°C); and following such preparation, the resultant surface-modified samples were subjected to analysis to provide the infrared drift spectra as aforementioned. The resulting spectra are set forth in Figure 8, which may be compared with Figure 7, wherein a reference infrared spectra appears for ABS resin beads.

Example XVI

In this Example, three further types of starting materials were utilized and subjected to the process of the invention. Specifically utilized were a Silver Bow® talc obtained from Pentech; a white bentonite, i.e. the Bentolite® L product of Southern Clay Products Company of Gonzales, Texas; and a mica, which was separated from micaceous clays including over 35% mica. The said mica was of the muscovite species, i.e. it was dioctahedral in form. The procedures used were otherwise those of Example XII, i.e. the monomer was 6-aminocaproic acid utilized at 2.5% by weight addition level. In each instance, following treatment, the resulting treated samples were tested by obtaining infrared drift spectra, and it was found that surface polymerization upon each of the samples had occurred as described in connection with the just preceding Examples. Samples were obtained using as initial starting materials both uncalcined dry particulates, and calcined particulates; and in each instance the resultant final products displayed similar surface polymerization.

Example XVII

The surface-modified products of the present invention are particularly useful as fillers in plastic, rubber and resin systems and the like, wherein by virtue of their unique compatibility enabled with such systems, excellent mechanical, thermal and other properties are enabled in the thereby filled systems. Accordingly, and in order to demonstrate this facet of the Invention, a series of products prepared by the procedures described in the Examples XII et seq. were evaluated in a filled system. In these instances the prepared products were used as a 40% by weight filler in a nylon system, namely in Vydyne 21X, which is a nylon 6,6. This product is available from Monsanto and is nonmally commercially filled with a mineral filler at the 40% level.

Melt mixing with nylon resins can conveniently be achieved by methods of extrusion (single or twin-screw) injection molding, milling and the like.

The mixing with the nylon was by processing in a twinscrew extruder, followed by injection molding. The procedures in injection molding were standard with respect to the nylon molding procedures. The resultant materials were tested with respect to tensile strength, modulus, and heat deflection at 1.82 MPa (264 psi), as shown in Table V below.

Table V

| Sample No. | Sample Composition | Tensile Strength MPa (psi) | Tensile Modulus MPa(psi) | HDT* at 1.82MPa (264 psi) |
|---|---|---|---|---|
| 1 | kaolin treated with 1 wt % 6 ACA | 43.18(6263) | 4300($6.3x10^5$) | 158°C |
| 2 | untreated hydrous kaolin (control) | 21.98(3186) | 3800($5.5x10^5$) | 142°C |
| 3 | hydrous kaolin & 1% caprolactam | 52.96(7680) | 4100($6.0x10^5$) | 153°C |
| 4 | hydrous kaolin & 1% amino silane | 48.76(7072) | 4000($5.8x10^5$) | 151°C |
| 5 | calcined kaolin & 1% amino silane | 62.24(9027) | 3700($5.3x10^5$) | 163°C |
| 6 | calcined kaolin & 1% 6ACA | 61.41(8906) | 3900($5.7x10^5$) | 157°C |
| 7 | commercially filled calcined kaolin** | 63.50(9210) | 3900($5.7x10^5$) | 140°C |

* This test is carried out by maintaining the sample at 1.82 MPa(264 psi), and then determining the temperature at that pressure at which it deforms.

** R250 - Monsanto 40% mineral filled Vydyne with impact modifier. Samples 1-6 are devoid of any impact modifiers.

Thus, as shown in Table V, when products of this invention are used as a filler in nylon or in other filled systems, there are found increased modulus, an increase in heat deflection temperature, an increase in a modulus stiffness, and increase in tensile strength.

While the present invention has been particularly set forth in terms of specific embodiments thereof, it will be understood in view of the instant disclosure, that numerous variations upon the invention are now enabled to those skilled in the art, which variations yet reside within the scope of the present teaching. Accordingly, the invention is to be broadly construed, and limited only by the scope and spirit of the claims now appended hereto.

## Claims

1. A method of producing a layered lattice silicate which is surface modified with an organic material wherein

the silicate in substantially dry particulate form is contacted with gaseous hydrogen and with a functional group-containing organic compound, said group being a polymerizable organic moiety.

2. A method for surface treating a layered lattice silicate which comprises the steps of:

pretreating said layered lattice silicate in substantially dry, particulate form with a hydrogen-containing gas to activate the surface thereof for reaction with functional group-containing organic compounds; and

reacting the so treated silicate with a functional group-containing organic compound, said group being a polymerizable organic moiety, to functionalize the same.

3. A method in accordance with claim 2, wherein said. pretreatment is conducted at temperatures above about 250°C.

4. A method in accordance with claim 3, wherein said pretreatment is conducted at temperatures from about 300°C to about 400°C.

5. A method in accordance with claim 3, wherein said hydrogen-containing gas includes a dry inert gas carrier.

6. A method in accordance with claim 2 in which the reaction time with said organic compound is within the range of about 15 seconds to about 1 hour.

7. A method in accordance with claim 2 in which said organic compound is an unsaturated compound selected from the group consisting of olefins, diolefins, acetylenes, allylic compounds and vinyl compounds.

8. A method in accordance with claim 2 in which said organic compound is selected from the group consisting of hydrocarbon substituted or unsubstituted ethylene, hydrocarbon substituted or unsubstituted butadiene, vinyl pyridines, vinyl acetate, styrene, acrylic acid, phenyl acetylene, allyl mercaptans and allyl amines.

9. A surface-treated layered lattice silicate product which comprises a layered lattice silicate, the surface of which has been preconditioned by treatment with gaseous hydrogen and then functionalized by reaction with a polymerizable organic moiety of an organic compound.

10. A composition comprising a filled polymer system comprising a matrix polymer and a filler, said filler comprising particles of a layered lattice silicate the surfaces of which have been activated with gaseous hydrogen and functionalized with a polymerizable organic moiety of an organic compound.

11. A filled resin system, comprising a resin matrix binder; and as a filler, a dispersed particulate kaolin clay, the surfaces of which have been activated with gaseous hydrogen, and the resultant surface-activated product functionalized with a polymerizable organic moiety of an organic compound.

12. A filled system in accordance with claim 11, wherein said matrix binder is a cured EPDM.

13. A filled system in accordance with claim 11, wherein said matrix binder is a polypropylene.

14. A method of producing a layered lattice silicate which is surface modified with an organic material, wherein the silicate in substantially dry, particulate form is contacted with an organic monomer, co-monomers, or a prepolymer, in the presence of gaseous hydrogen.

15. A method in accordance with claim 14, in which a prepolymer of acrylonitrile/butadiene/styrene is used.

16. A method in accordance with claim 14, in which a monomer selected from the group consisting of 6-amino caproic acid and E-caprolactam is used.

17. A particulate layered lattice silicate comprising particles of said silicate, the surfaces of which have been modified by a polymer synthesized in situ in the presence of gaseous hydrogen or by reacting a prepolymer in situ on the silicate in the presence of gaseous hydrogen.

18. The composition of claim 9 or 17, in which said layered lattice silicate is a kaolin.

19. The composition of claim 17, in which said layered lattice silicate is a mica, a talc, or a bentonite.

20. A composition comprising a filled polymer system comprisig a matrix polymer and a filler, said filler comprising particles of a layered lattice silicate the surfaces of which have been modified by a polymer synthesized in situ on the silicate in the presence of gaseous hydrogen or modified by reacting a prepolymer in situ on the silicate in the presence of gaseous hydrogen.

21. A composition according to claim 20 in which the in situ synthesized polymer is essentially the same as the matrix polymer or is compatible with the matrix polymer.

22. A composition according to claim 20 in which the in situ synthesized polymer is a polyamide.

## Patentansprüche

1. Verfahren zur Herstellung eines ein Schichtgitter aufweisenden Silikates, dessen Oberfläche mit einem organischen Material modifiziert ist, bei dem ein im wesentlichen trockenes, in Teilchenform vorliegendes Silikat mit gasförmigem Wasserstoff und einer, eine funktionelle Gruppe enthaltenden organischen Verbindung in Berührung gebracht wird, wobei die genannte Gruppe eine polymerisierbare organische Gruppierung ist.

2. Verfahren zur Oberflächenbehandlung eines ein Schichtgitter aufweisenden Silikates, welches die folgenden Verfahrensschritte aufweist:

Vorbehandeln des genannten ein Schichtgitter aufweisenden Silikates, welches im wesentlichen trocken ist und in Teilchenform vorliegt, mit einem Wasserstoff enthaltenden Gas, um seine Oberfläche für die Reaktion mit, funktionelle Gruppen aufweisenden, organischen Verbindungen zu aktivieren; und

Umsetzen des so behandelten Silikates mit einer eine funktionelle Gruppe aufweisenden organischen Verbindung, wobei die genannte Gruppe eine polymerisierbare organische Gruppierung ist, um das Silikat zu funktionalisieren.

3. Verfahren gemäss Anspruch 2, bei dem die genannte Vorbehandlung bei einer Temperatur oberhalb annähernd 250°C durchgeführt wird.

4. Verfahren gemäss Anspruch 3, bei dem die genannte Vorbehandlung bei Temperaturen von annähernd 300°C bis annähernd 400°C durchgeführt wird.

5. Verfahren gemäss Anspruch 3, bei dem das Wasserstoff enthaltende Gas ein trockenes inertes Trägergas einschliesst.

6. Verfahren gemäss Anspruch 2, bei dem die Reaktionsdauer für die Umsetzung mit der genannten organischen Verbindung im Bereich von annähernd 15 Sekunden bis annähernd 1 Stunde liegt.

7. Verfahren gemäss Anspruch 2, bei dem die genannte organische Verbindung eine aus der aus Olefinen, Diolefinen, Acetylenen, Allylverbindungen und Vinylverbindungen bestehenden Gruppe ausgewählte ungesättigte Verbindung ist.

8. Verfahren gemäss Anspruch 2, bei dem die organische Verbindung aus der aus kohlenwasserstoff-substituiertem oder unsubstituiertem Ethylen, kohlenwasserstoff-substituiertem oder unsubstituiertem Butadien, Vinylpyridinen, Vinylacetat, Styrol, Acrylsäure, Vinylacetylen, Allylmercaptanen und Allylaminen bestehenden Gruppe ausgewählt ist.

9. Oberflächenbehandeltes, ein Silikat mit Schichtgitter enthaltendes Produkt, welches ein Silikat mit einem Schichtgitter aufweist, dessen Oberfläche durch Behandeln mit gasförmigen Wasserstoff konditioniert und anschliessend durch Umsetzung mit einer, eine polymerisierbare organische Gruppierung aufweisenden organischen Verbindung funktionalisiert worden ist.

10. Zubereitung, enthaltend ein mit einem Füllstoff versehenes Polymer-System, welches ein Matrixpolymer und einen Füllstoff enthält, wobei der Füllstoff Teilchen eines ein Schichtgitter aufweisenden Silikates, dessen Oberfläche mit gasförmigem Wasserstoff aktiviert und mit einer polymerisierbaren organischen Gruppierung einer organischen Verbindung funktionalisiert worden ist, enthält.

11. Füllstoff enthaltendes Harz-System, enthaltend eine als Bindemittel dienende Harzmatrix und als Füllstoff dispergiertes teilchenförmiges Kaolin, dessen Oberflächen mit gasförmigem Wasserstoff aktiviert und danach das resultierende Produkt mit aktivierter Oberfläche mit einer polymerisierbaren organischen Gruppierung einer organischen Verbindung funktionalisiert worden sind.

12. Füllstoff enthaltendes System gemäss Anspruch 11, worin die als Bindemittel dienende Matrix ein gehärtetes EPDM ist.

13. Füllstoff enthaltendes System gemäss Anspruch 11, worin die als Bindemittel dienende Matrix ein Polypropylen ist.

14. Verfahren zur Herstellung eines ein Schichtgitter aufweisendes Silikates, dessen Oberfläche mit einem organischen Material modifiziert ist, bei dem das Silikat,das im wesentlichen trocken ist und in Teilchenform vorliegt, mit einem organischen Monomer, Co-Monomer oder einem Prepolymer in Gegenwart von Wasserstoffgas in Berührung gebracht wird.

15. Verfahren gemäss Anspruch 14, bei dem ein Prepolymer aus Acrylnitril/Butadien/Styrol verwendet wird.

16. Verfahren gemäss Anspruch 14, bei dem ein aus der aus 6-Amino-Capron-Säure und E-Caprolactam bestehenden Gruppe ausgewähltes Monomer verwendet wird.

17. Teilchenförmiges, ein Schichtgitter aufweisendes Silikat, enthaltend Teilchen des genannten Silikates, dessen Oberflächen mittels eines in Gegenwart von Wasserstoffgas in situ erzeugten Polymers oder durch Umsetzung eines Prepolymers in situ auf dem Silikat in Gegenwart von Wasserstoffgas modifiziert worden sind.

18. Zubereitung nach Anspruch 9 oder 17, worin das ein Schichtgitter aufweisende Silikat ein Kaolin ist.

19. Zubereitung nach Anspruch 17, bei dem das genannte, ein Schichtgitter aufweisende Silikat ein Glimmer, ein Talk oder ein Bentonit ist.

20. Zubereitung enthaltend ein mit Füllstoff versehenes Polymersystem, welches ein Matrixpolymer und einen Füllstoff enthält, wobei der genannte Füllstoff Teilchen eines Silikates mit Schichtgitter aufweist, dessen Oberflächen mittels eines in Gegenwart von Wasserstoffgas auf dem Silikat in situ erzeugten Polymers oder durch Umsetzung mit einem Prepolymer in situ auf dem Silikat in Gegenwart von Wasserstoffgas modifiziert worden waren.

21. Zubereitung gemäss Anspruch 20, in welcher das in situ erzeugte Polymer im wesentlichen das gleiche

ist wie das Matrixpolymer oder mit dem Matrixpolymer verträglich ist.

22. Zubereitung in Uebereinstimmung mit Anspruch 20, bei dem das in situ erzeugte Polymer ein Polyamid ist.

## Revendications

1. Procédé de fabrication d'un silicate formant des réseaux à couches, modifié en surface par un matériau organique, procédé dans lequel le silicate est mis en contact sous forme de particules substantiellement sèches avec de l'hydrogène gazeux et un composé organique comportant de groupe fonctionnel, ce groupe étant un reste organique polymérisable.

2. Procédé de traitement en surface d'un silicate formant des réseaux à couches, comprenant les étapes suivantes:

prétraitement du silicate formant des réseaux à couches sous forme de particules substantiellement sèches, avec un gaz contenant de l'hydrogène, afin d'activer la surface du silicate pour une réaction avec de composés organiques ayant des groupes fonctionnels; et

réaction du silicate ainsi traité avec un composé organique contenant de groupe fonctionnel, ce groupe étant un reste organique nolymérisable, afin de le fonctionnaliser.

3. Procédé selon la revendication 2, dans lequel le prétraitement est exécuté à des températures dépassant 250° environ.

4. Procédé selon la revendication 3, dans lequel le prétraitement est exécuté à des températures comprises entre environ 300°C et environ 400°C.

5. Procédé selon la revendication 3, dans lequel le dit gaz contenant de l'hydrogène contient un véhicule gazeux inerte et sec.

6. Procédé selon la revendication 2, dans lequel la durée de réaction avec le dit composé organique est comprise entre environ 15 secondes et environ 1 heure.

7. Procédé selon la revendication 2, dans lequel le dit composé organique est un composé insaturé choisi parmi les oléfines, les dioléfines, les acétylènes, les composés allyliques, et les composés vinyliques.

8. Procédé selon la revendication 2, dans lequel le dit composé organique est choisi parmi l'éthylène substitué ou non par des hydrocarbures, le butadiène substitué ou non par des hydrocarbures, les vinylpyridines, l'acétate de vinyle, le styrène, l'acide acrylique, le phénylacétylène, les allylmercaptans et les allylamines.

9. Produit de silicate formant des réseaux à couches et traité en surface, comprenant un silicate formant des réseaux à couches dont la surface a été préconditionnée par traitement avec de l'hydrogène gazeux puis fonctionnalisée par réaction avec un reste organique polymérisable d'un composé organique.

10. Composition de système poylmère chargé, comprenant un polymère formant matrice et une charge, cette charge comprenant des particules d'un silicate formant des réseaux à couches dont la surface avait été activée avec de l'hydrogène gazeux puis fonctionnalisée par réaction avec un reste organique polymérisable d'un composé organique.

11. Système de résine chargée, comprenant une résine formant matrice et, comme charge, une argile de kaolin particulaire dispersée dont les surfaces avaient été activées par de l'hydrogène gazeux puis fonctionnalisées avec un reste organique polymérisable d'un composé organique.

12. Système chargé selon la revendication 11, dans lequel le dit liant formant matrice est un EPDM polymérisé.

13. Système chargé selon la revendication 11, dans lequel le dit liant formant matrice est un polypropylène.

14. Procédé de fabrication d'un silicate formant des réseaux à couches modifié en surface avec un matériau organique, dans lequel le silicate est mis en contact sous forme particulaire substantiellement sèche, avec un monomère, des co-monomères, ou un prépolymère organiques en présence d'hydrogène gazeux.

15. Procédé selon la revendication 14, dans lequel on utilise un prépolymère d'acrylonitrile/butadiène/styrène.

16. Procédé selon la revendication 14, dans lequel on utilise comme monomère de l'acide 6-aminocaproïque ou de l'E-caprolactame.

17. Silicate particulaire formant des réseaux à couches, comprenant des particules du dit silicate dont les surfaces ont été modifiées par un polymère synthétisé in situ en présence d'hydrogène gazeux ou par réaction d'un prépolymère in situ sur le silicate en présence d'hydrogène gazeux.

18. Composition selon les revendications 9 ou 17, dans laquelle le dit silicate formant des réseaux à couches est un kaolin.

19. Composition selon la revendication 17, dans laquelle le dit silicate formant des réseaux à couches est un mica, un talc, ou une bentonite.

20. Composition, comprenant un système de polymère chargé comprenant un polymère formant matrice et une charge, cette charge comprenant des particules d'un silicate formant des réseaux à couches dont les surfaces ont été modifiées par un polymère synthétisé in situ sur le silicate en présence d'hydrogène gazeux ou modifiées par réaction d'un prépolymère in situ sur le silicate en présence d'hydrogène gazeux.

21. Composition selon la revendication 20, dans laquelle le polymère synthétisé in situ est essentiellement le même que le polymère formant matrice ou est compatible avec celui-ci.

22. Composition selon la revendication 20, dans laquelle le polymère synthétisé in situ est un polyamide.

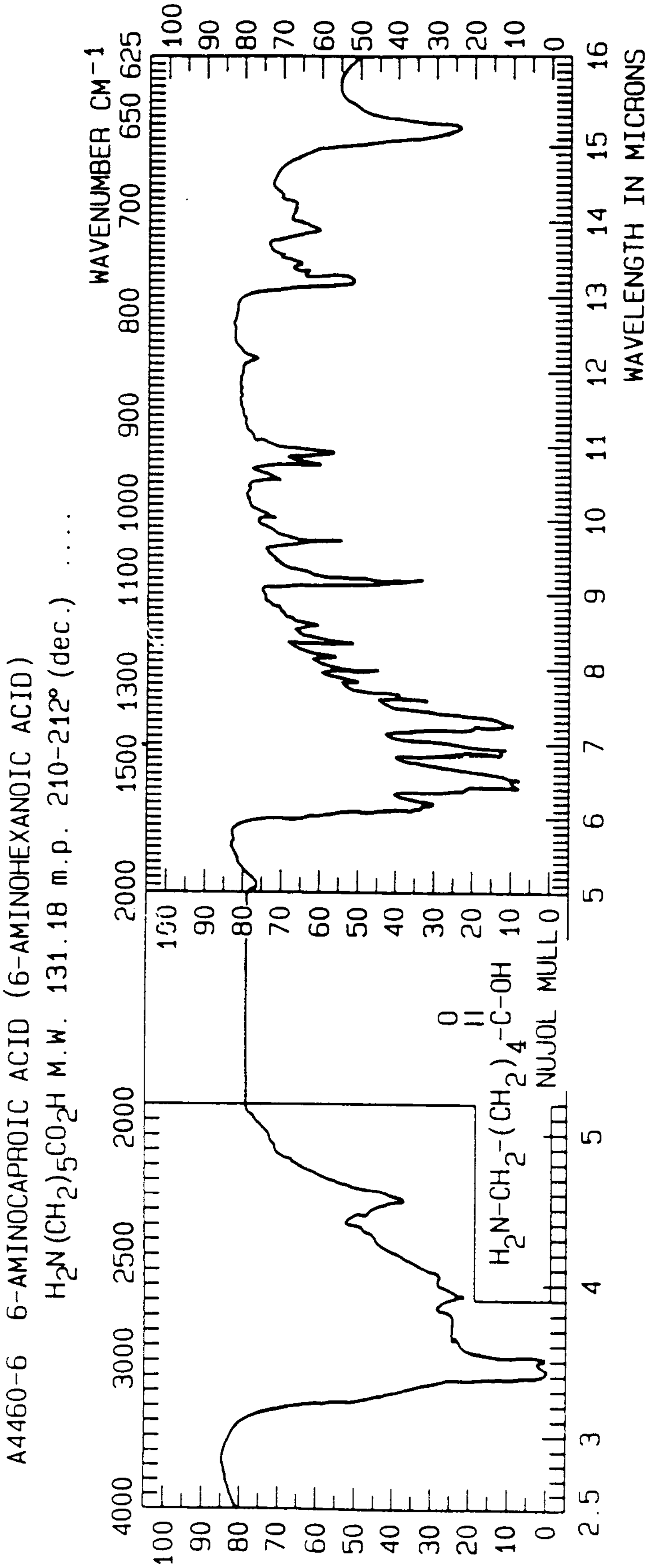

A4460-6 6-AMINOCAPROIC ACID (6-AMINOHEXANOIC ACID)
$H_2N(CH_2)_5CO_2H$ M.W. 131.18 m.p. 210-212° (dec.)
$H_2N-CH_2-(CH_2)_4-C(=O)-OH$
NUJOL MULL
WAVENUMBER CM-1
WAVELENGTH IN MICRONS


FIGURE 1

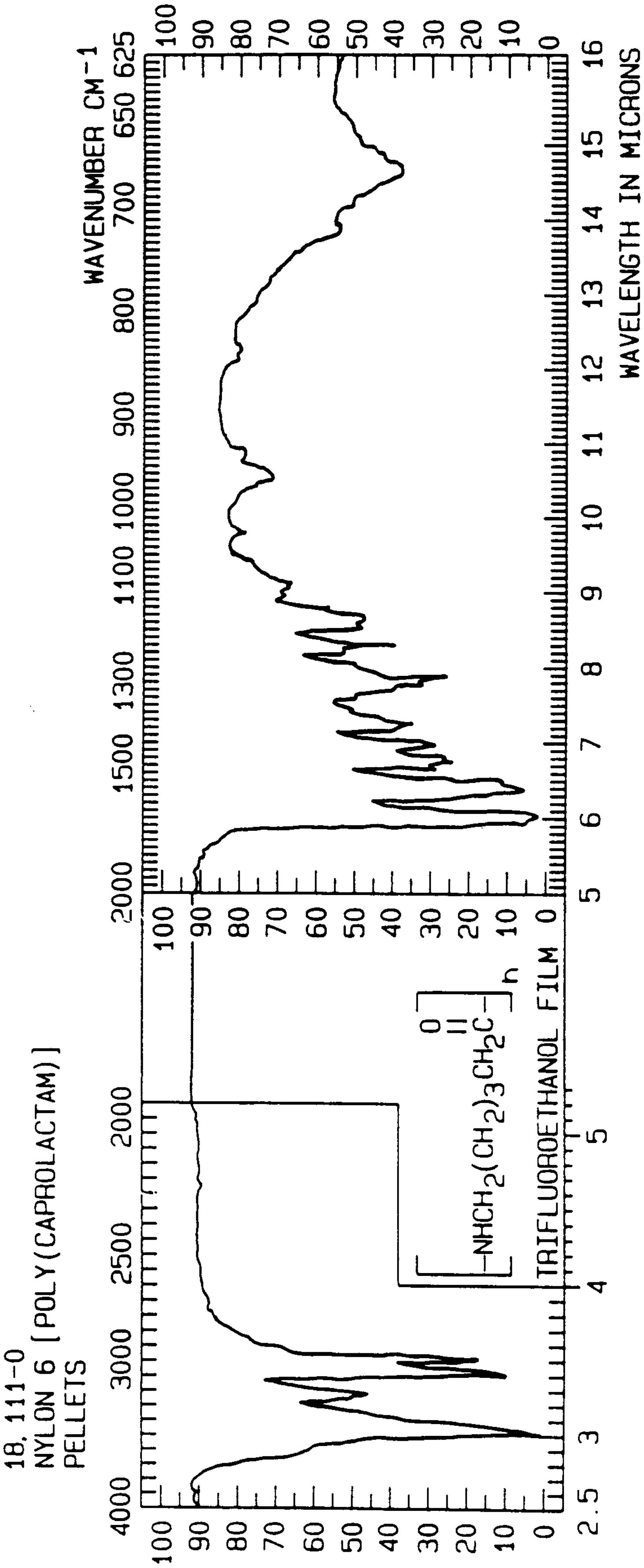
18, 111-0
NYLON 6 [POLY(CAPROLACTAM)]
PELLETS
WAVENUMBER CM-1
4000 3000 2500 2000 2000 1500 1300 1100 1000 900 800 700 650 625
WAVELENGTH IN MICRONS
2.5 3 4 5 5 6 7 8 9 10 11 12 13 14 15 16
TRIFLUOROETHANOL FILM

FIGURE 2

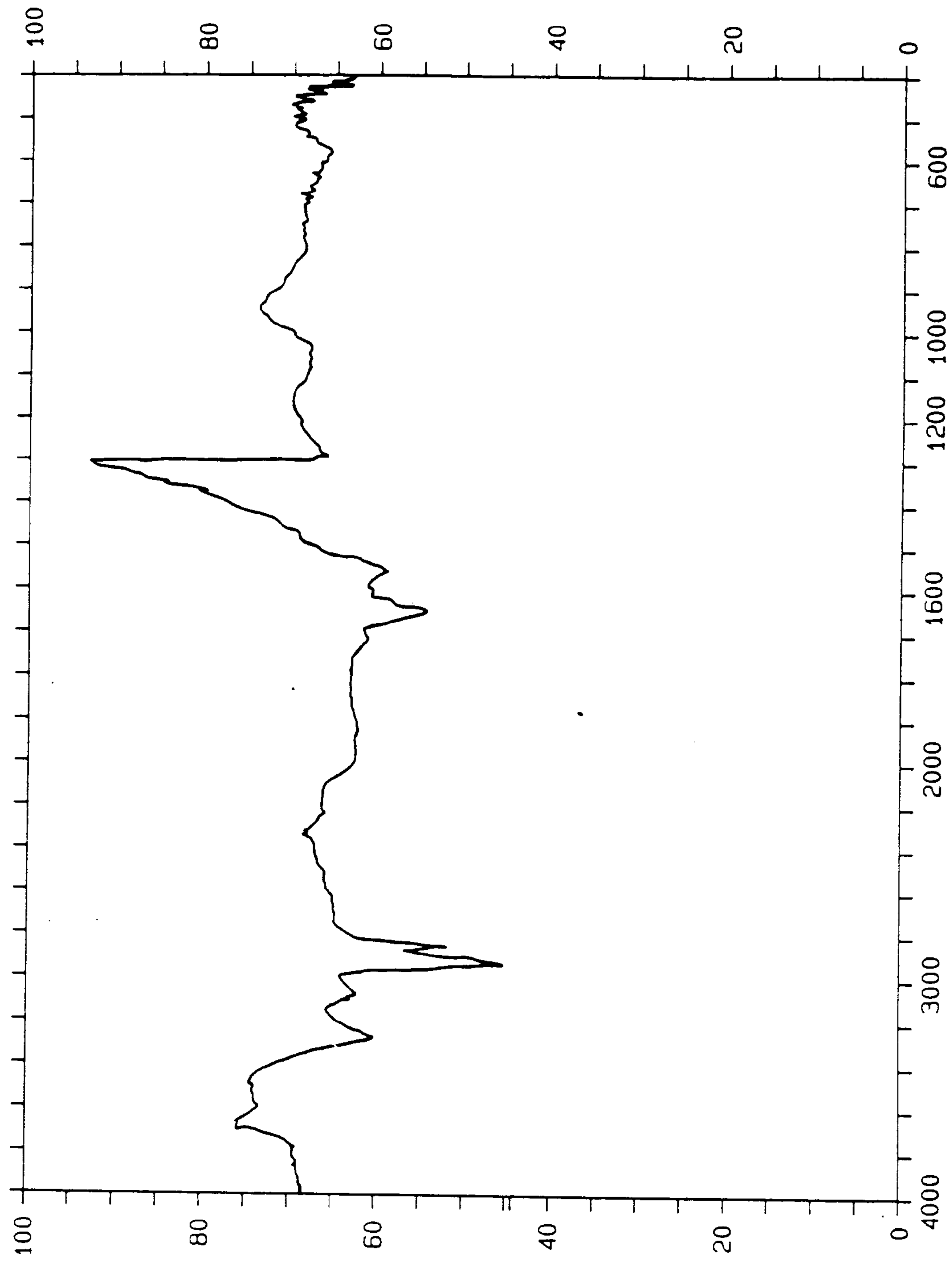
100
80
60
40
20
0
600
1000
1200
1600
2000
3000
4000
WAVENUMBER CM-1

FIGURE 3

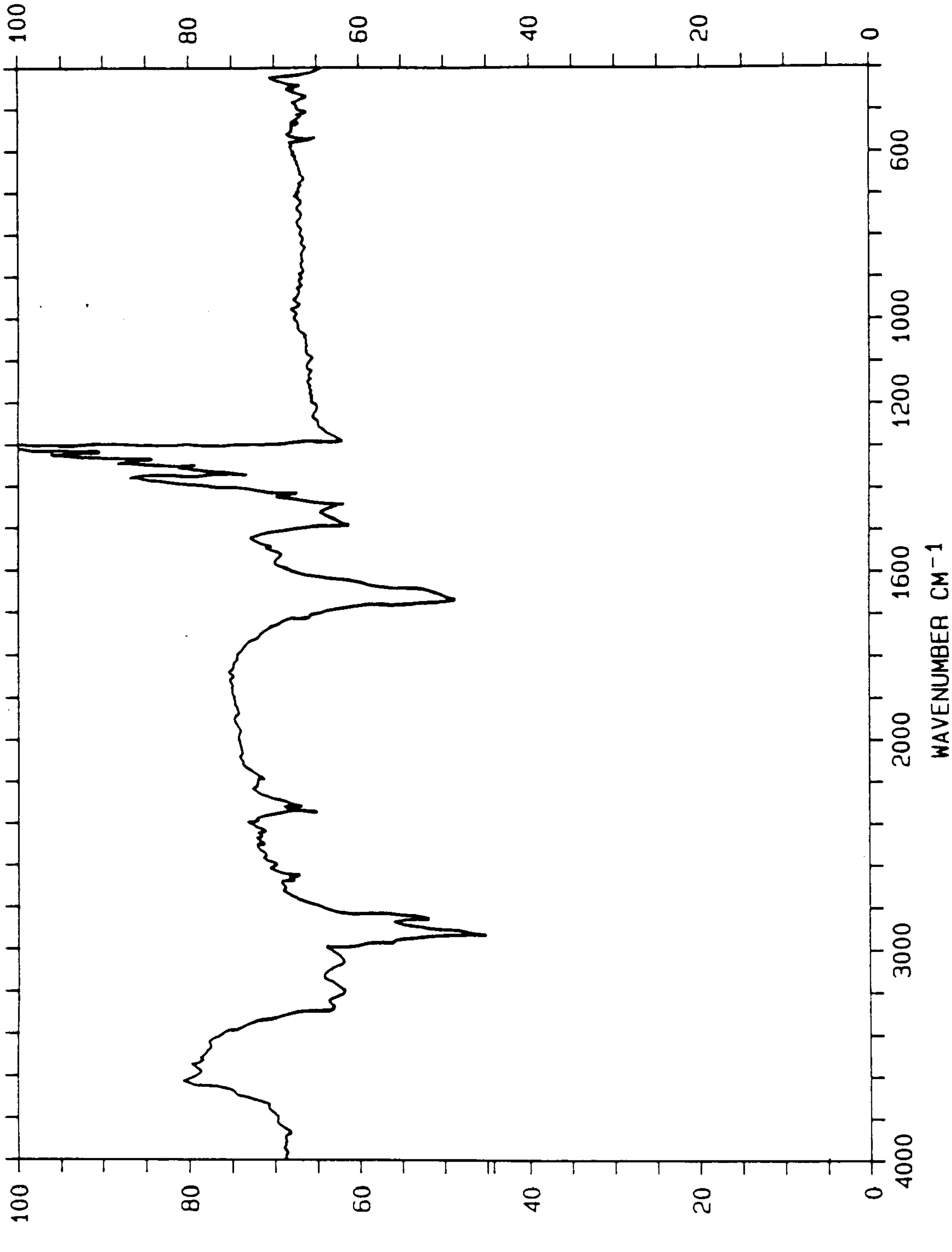
100
80
60
40
20
0
4000
3000
2000
1600
1200
1000
600
WAVENUMBER CM-1

FIGURE 4

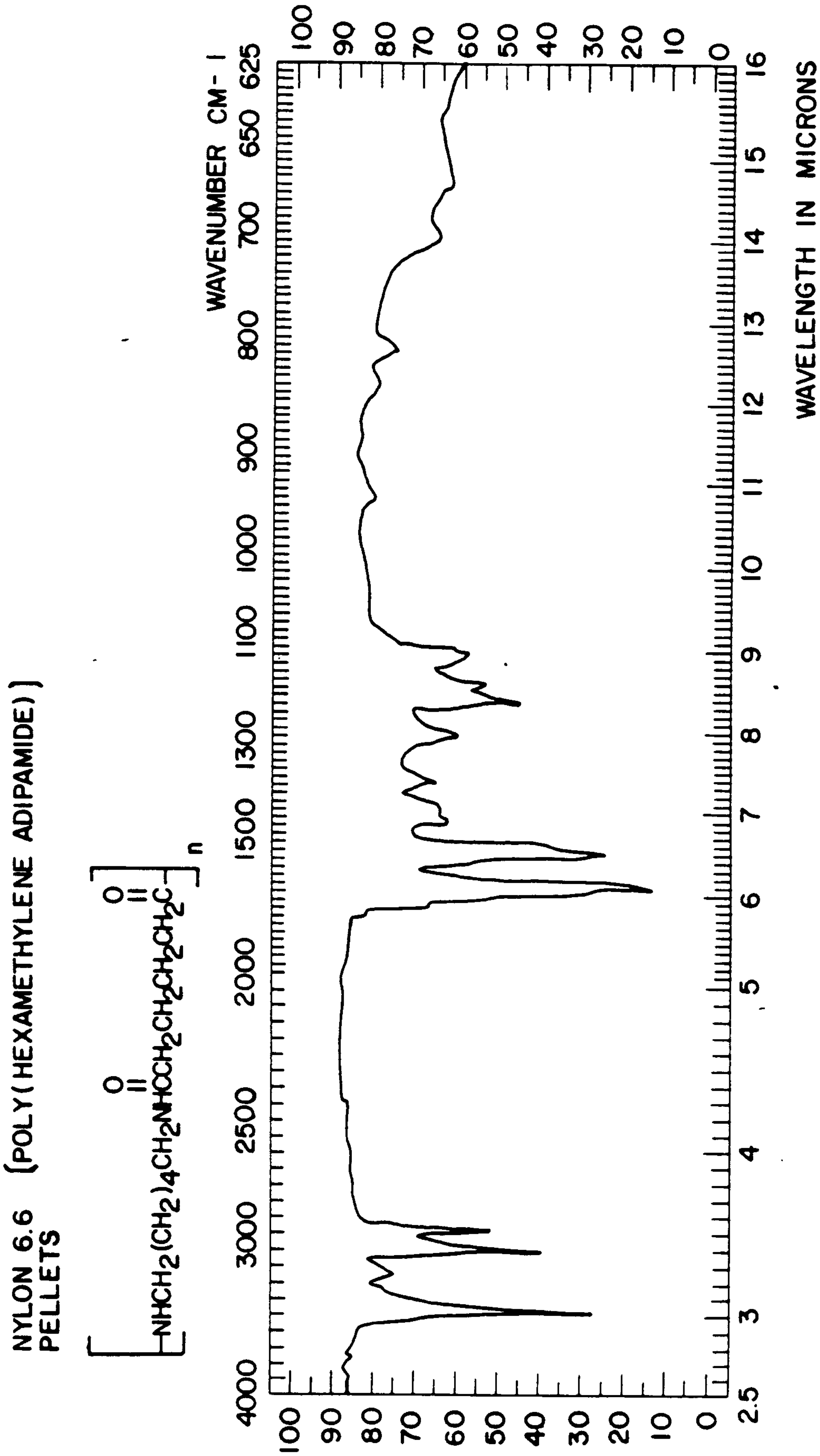
NYLON 6.6
PELLETS
(POLY(HEXAMETHYLENE ADIPAMIDE))
WAVENUMBER CM-1
4000 3000 2500 2000 1500 1300 1100 1000 900 800 700 650 625
100 90 80 70 60 50 40 30 20 10 0
2.5 3 4 5 6 7 8 9 10 11 12 13 14 15 16
WAVELENGTH IN MICRONS

FIGURE 5

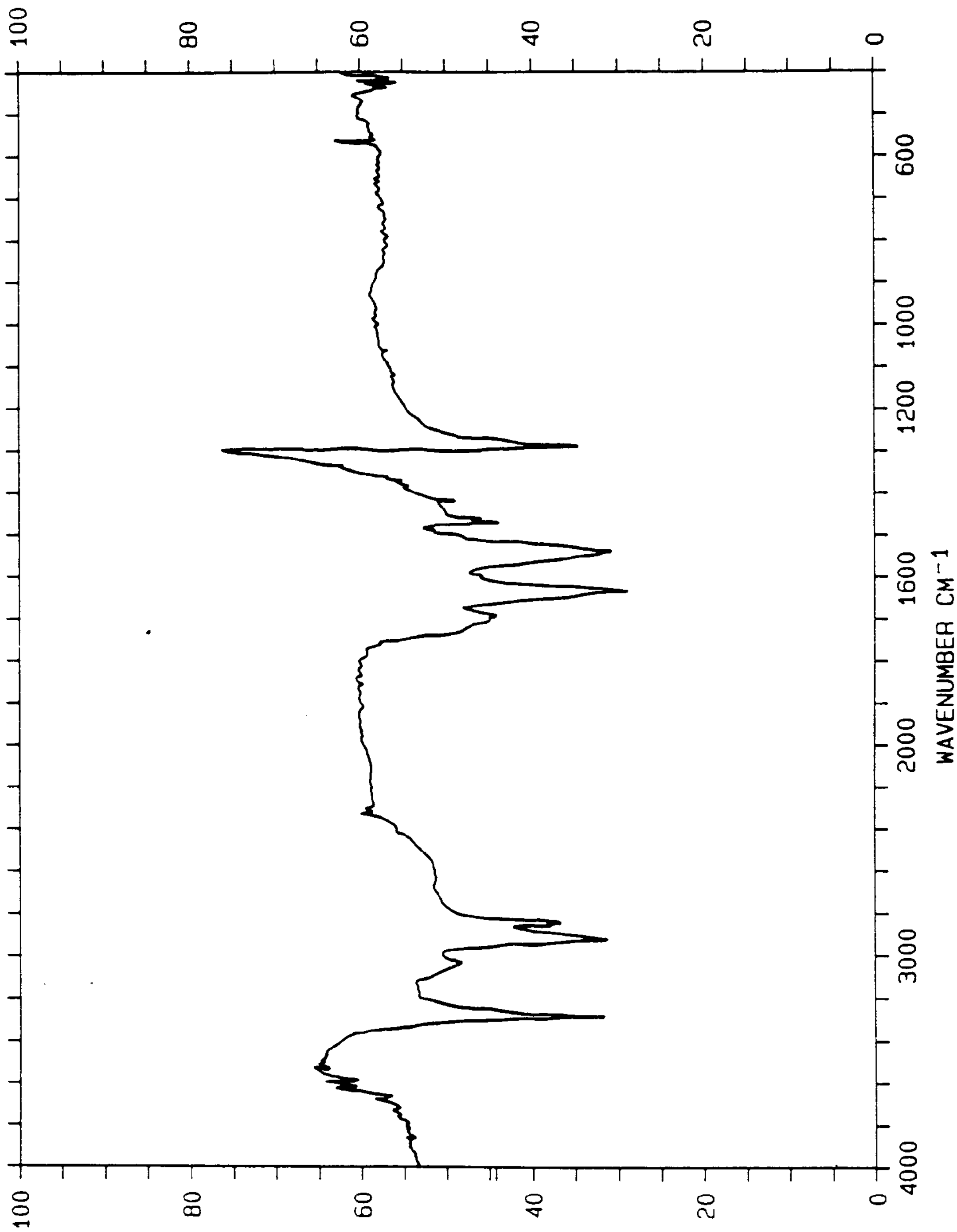
100
80
60
40
20
0
4000
3000
2000
1600
1200
1000
600
WAVENUMBER CM$^{-1}$

FIGURE 6

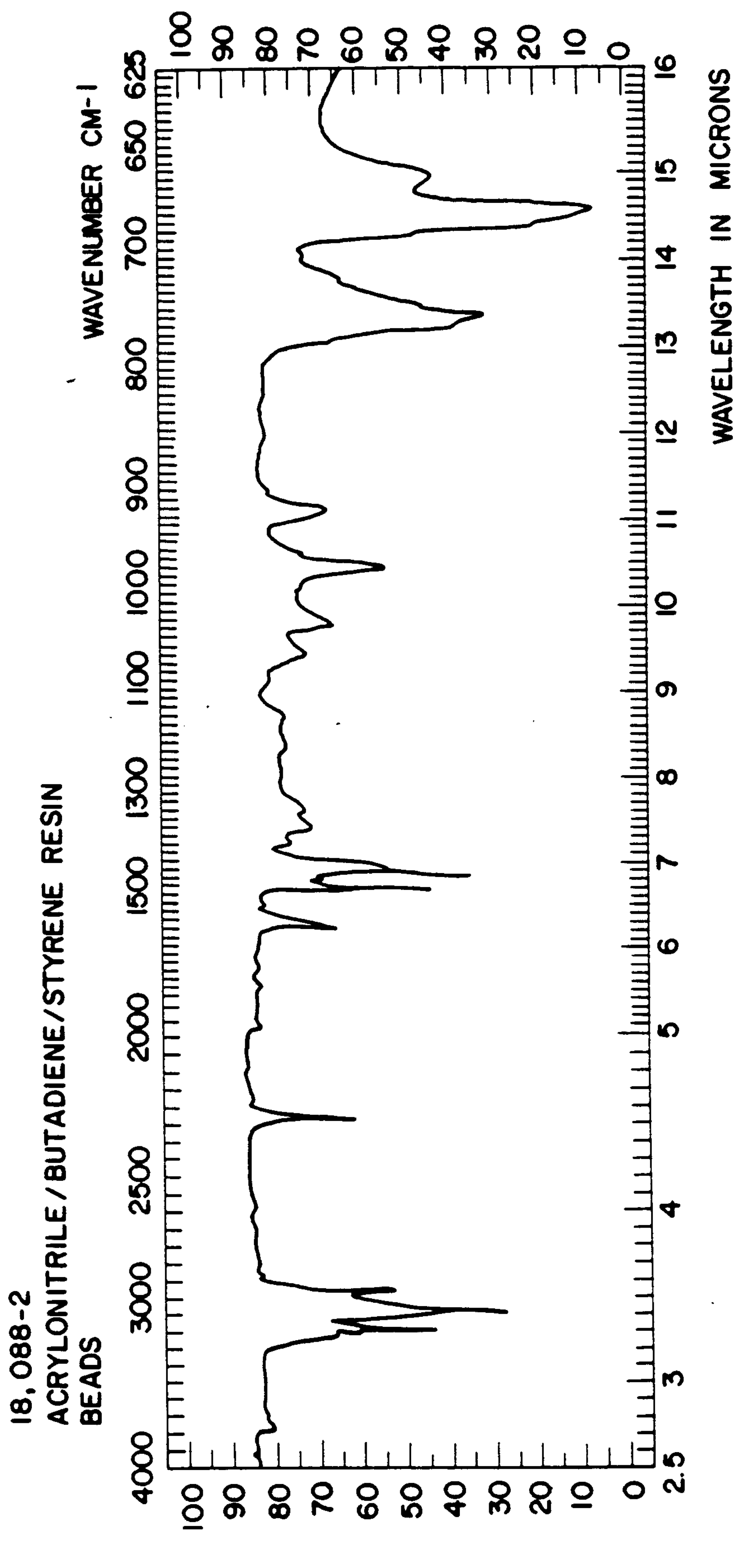
18,088-2
ACRYLONITRILE/BUTADIENE/STYRENE RESIN
BEADS
WAVENUMBER CM-1
4000 3000 2500 2000 1500 1300 1100 1000 900 800 700 650 625
100 90 80 70 60 50 40 30 20 10 0
2.5 3 4 5 6 7 8 9 10 11 12 13 14 15 16
WAVELENGTH IN MICRONS

FIGURE 7

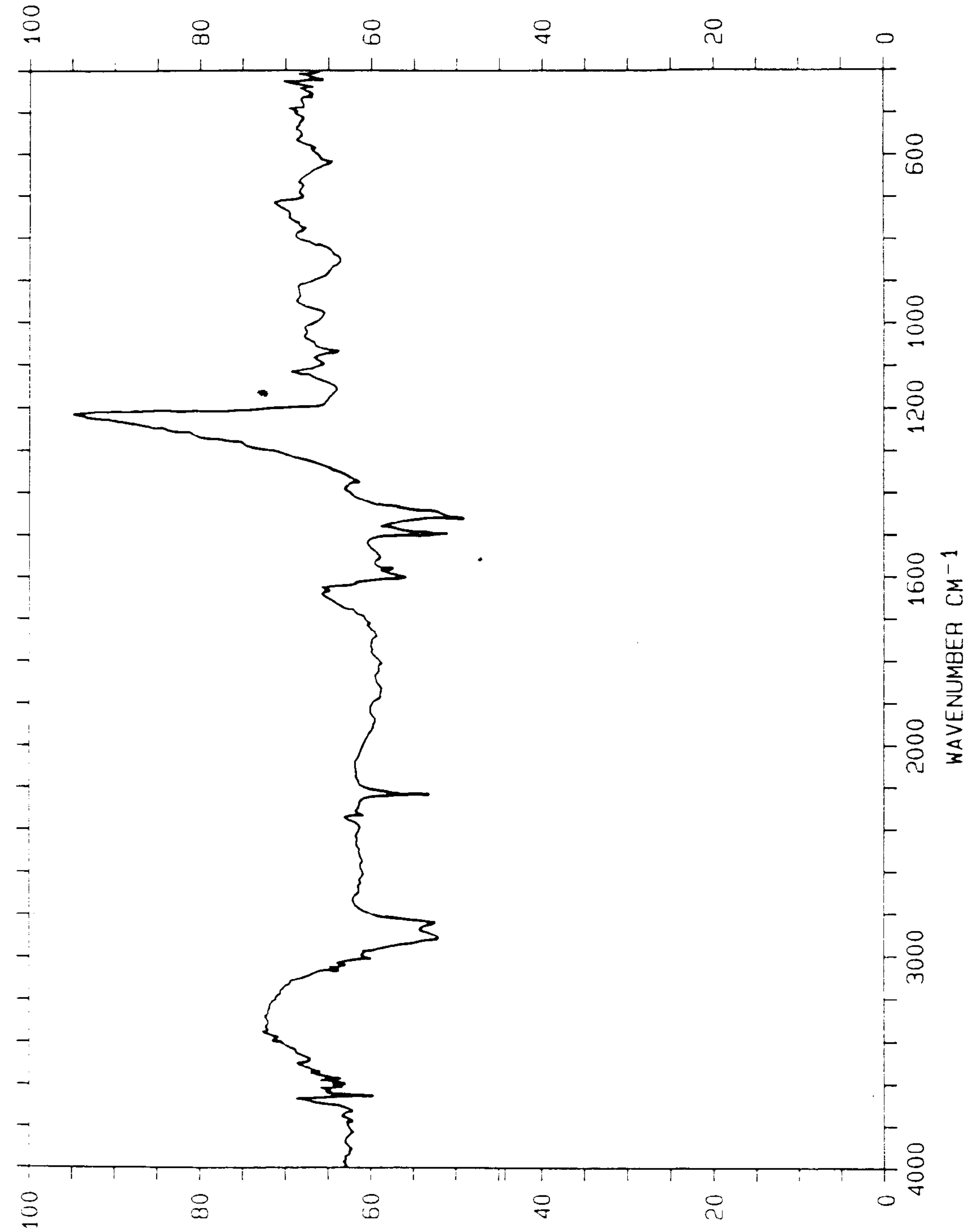
100
80
60
40
20
0
600
1000
1200
1600
2000
3000
4000
WAVENUMBER CM-1

FIGURE 8